# EUROPÄISCHE PATENTSCHRIFT

(11) **EP 2 828 680 B1**
(45) Veröffentlichungstag und Bekanntmachung des Hinweises auf die Patenterteilung: **06.09.2017**
(21) Anmeldenummer: 13701743.0
(22) Anmeldetag: 21.01.2013
(51) Int. Cl.: G01S 7/02, G01S 13/93, G01S 7/40

(54) **SENSORHALTERUNG FÜR EINEN SENSOR ZUR OBJEKTDETEKTION**
SENSOR HOLDER FOR A SENSOR FOR OBJECT DETECTION
SUPPORT DE CAPTEUR POUR UN CAPTEUR DE DÉTECTION D'OBJET

(30) Priorität: 19.03.2012 DE 102012204267
(43) Veröffentlichungstag der Anmeldung: 28.01.2015
(73) Patentinhaber: Robert Bosch GmbH, 70442 Stuttgart (DE)
(72) Erfinder: DIHLMANN, Mathias, 75331 Engelsbrand (DE)
(86) Internationale Anmeldenummer: PCT/EP2013/051025
(87) Internationale Veröffentlichungsnummer: WO 2013/139499

(56) Entgegenhaltungen:
- DE-A1- 10 154 080
- DE-A1- 10 307 263
- DE-A1- 10 354 985

## Beschreibung

Die Erfindung betrifft eine Sensorhalterung zur Objektdetektion, insbesondere für einen Radarsensor. Insbesondere betrifft die Erfindung eine Sensorhalterung für einen Sensor zur Objektdetektion für Kraftfahrzeuge, insbesondere für Fahrerassistenzsysteme. Weiter betrifft die Erfindung eine Sensoreinheit mit einer Sensorhalterung.

### STAND DER TECHNIK

Radarsensoren werden in Kraftfahrzeugen zur Abstands- und/oder Geschwindigkeitsmessung von Objekten verwendet. Es sind beispielsweise Fahrassistenzsysteme in Form von Fahrgeschwindigkeitsreglern für Kraftfahrzeuge mit einem Radarsystem zur Ortung eines vorausfahrenden Fahrzeuges und zur Messung des Abstandes zu diesem bekannt. Ein solches Abstandsregelsystem wird auch als ACC-System (Adaptive Cruise Control) bezeichnet.

Um die ordnungsgemäße Funktion von Radarsensoren zu gewährleisten, müssen diese beispielsweise nach einem Montieren im Fahrzeug innerhalb vorgegebener Grenzen zur Fahrbahn bzw. dem gewünschten Erfassungsbereich ausgerichtet werden. Beispielsweise kann für einen Radarsensor für ein System zur adaptiven Fahrgeschwindigkeitsregelung üblicherweise eine Ausrichtung einer Hauptstrahlungsrichtung des Radarsensors in einem genau definierten Winkel zur Fahrzeuglängsachse erforderlich, beispielsweise parallel zur Fahrzeuglängsachse. Durch eine solche Ausrichtung können beispielsweise herstellungsbedingte Toleranzen der mechanischen Komponenten des Radarsensors sowie Toleranzen der Befestigung am Kraftfahrzeug ausgeglichen werden.

Für einen Radarsensor zur Objektdetektion ist insbesondere eine Ausrichtung oder Justierung eines Neigungswinkels einer Hauptstrahlungsrichtung des Radarsensors wichtig. Dieser Winkel wird auch als Elevation bezeichnet.

DE 10354985 A1 beschreibt ein Verfahren zur Justierung einer Ausrichtung eines an einer Montagebaugruppe befestigten Radars. In einem Beispiel enthält eine Montagebaugruppe ein eine Radarantenne umgebendes Gehäuse, das an einem Montagepunkt, um den sich das Gehäuse drehen kann, mit dem Fahrzeug verbunden ist. Eine Justierplatte hat eine bogenförmige Verzahnung zur Steuerung der Drehposition des Gehäuses und damit der Radarantenne relativ zum Fahrzeug mit einem motorgetriebenen Zahnrad und/oder Handeinstellungselement mit einem Schneckenrad in Eingriff.

DE 10307263 A1 beschreibt ein Verfahren zum Einstellen der Detektionsachse eines Objektdetektors. Eine Halterung, auf der das Radarsystem gelagert ist, ist an vier Ecken an dem Fahrzeugkörper mittels vier Bolzen fixiert. Integral am Gehäuse des Radarsystems vorgesehene Stege werden an geschweißten Muttern der Halterung durch Justierbolzen fixiert.

Aus DE 101 54 080 A1 ist eine Halterung für ein justierbares Gehäuse eines Radarsensors bekannt, bei der die Lage des Gehäuses an einem Montageort mit Justierschrauben in einer horizontalen und einer vertikalen Lage veränderbar ist. Insbesondere kann der Neigungswinkel des Radarsensors verändert werden. Die Justierschrauben sind am Montageort in jeweiligen Befestigungsdomen dreh- und kippbar gehalten. Die jeweiligen Befestigungsdome sind wiederum am Montageort in einer entsprechenden Ausnehmung dreh- und zugsicher einrastbar.

### OFFENBARUNG DER ERFINDUNG

Aufgabe der Erfindung ist es, eine Sensorhalterung zu schaffen, die bei besonders einfachem Aufbau eine Vertikaljustierung eines Sensors ermöglicht.

Diese Aufgabe wird gelöst durch eine Sensorhalterung nach Anspruch 1 für einen Sensor zur Objektdetektion, mit einer Montageeinheit für den Sensor und mit einem Halterahmen, an dem die Montageeinheit schwenkbar gehalten ist, und mit einer an dem Halterahmen gelagerten Justierwelle, die eine schraubenartig um die Justierwelle verlaufende Führungskontur aufweist, die in Eingriff mit einem Führungselement der Montageeinheit steht. Die Führungskontur verläuft schraubenartig, d.h. entlang einer Schraubenlinie, um den Umfang der Justierwelle.

Die Sensorhalterung erfordert nur wenige bewegliche Bauteile. Eine schwenkbare Lagerung der Montageeinheit am Halterahmen kann beispielsweise einfach durch zwei angeformte Zapfen erfolgen. Eine drehbar gelagerte Justierwelle kann durch die schraubenartig um die Justierwelle verlaufende Führungskontur eine genaue und selbsthemmende Justierung der Position des in Eingriff mit der Führungskontur stehenden Führungselements gestatten. Dabei kann durch radiales Spiel des Eingriffs ein Ausgleich zwischen der durch die Führungskontur vorgegebenen Justierrichtung parallel zur Längsachse der Justierwelle und einer kreisbogenförmigen Schwenkbewegung des Führungselements um die Schwenkachse am Halterahmen ermöglicht werden.

Vorzugsweise ist die Montageeinheit über Zapfen, die auf einer Schwenkachse angeordnet sind, an dem Halterrahmen schwenkbar gehalten. Die Zapfen können beispielsweise an der Montageeinheit oder an dem Halterahmen ausgebildet sein. Sie ermöglichen eine besonders einfache schwenkbare Lagerung der Montageeinheit am Halterahmen.

Der Halterahmen weist wenigstens eine als Drehlager ausgebildete Rastaufnahme für einen Abschnitt der Justierwelle auf, wobei die Rastaufnahme auf einem Umfangsabschnitt offen ist. Dies ermöglicht ein Einführen des Abschnitts der Justierwelle in die Rastaufnahme durch den offenen Abschnitt des Umfangs. Insbesondere ist vorzugsweise die Justierwelle in die Rastaufnahme einrastbar. Vorzugsweise ist die Rastaufnahme auf einem der Montageeinheit gegenüberliegenden Umfangsabschnitt offen. Die Justierwelle kann beispielsweise aus einer Position in die Rastaufnahme unter Einrasten einsetzbar sein, in welche Position anschließend die Montageeinheit angeordnet wird. Beispielsweise kann die Justierwelle zwischen der Montageeinheit und einem Boden der Rastaufnahme angeordnet sein. Auf diese Weise können etwaige beim Justieren auftretende Querkräfte zwischen der Justierwelle und dem Führungselement der Montageeinheit vom Halterahmen aufgenommen werden, indem die Justierwelle sich am Boden der Rastaufnahme abstützt.

Vorzugsweise ist zumindest ein in der wenigstens einen Rastaufnahme gelagerter Abschnitt der Justierwelle einstückig mit der Führungskontur ausgebildet, und die wenigstens eine Rastaufnahme ist einstückig mit einem Abschnitt des Halterahmens ausgebildet. Beispielsweise kann die Justierwelle als einstückiges Kunststoffteil ausgebildet sein. Beispielsweise kann der Halterahmen mit der wenigstens einen Rastaufnahme als einstückiges Kunststoffteil ausgebildet sein. Der Zusammenbau des Halterahmens mit der Justierwelle wird dadurch besonders vereinfacht.

### KURZE BESCHREIBUNG DER ZEICHNUNGEN

Ein bevorzugtes Ausführungsbeispiel der Erfindung wird im folgenden anhand der Zeichnungen näher erläutert.

Es zeigen:
- Fig. 1: eine schematische Darstellung einer Sensorhalterung entlang einer vertikalen Schnittebene;
- Fig. 2: eine Vorderansicht der Sensorhalterung;
- Fig. 3: eine Seitenansicht der Sensorhalterung;
- Fig. 4: ein Draufsicht auf einen Halterahmen der Sensorhalterung; und
- Fig. 5: eine Vorderansicht des Halterahmens.

### DETAILLIERTE BESCHREIBUNG VON AUSFÜHRUNGSBEISPIELEN

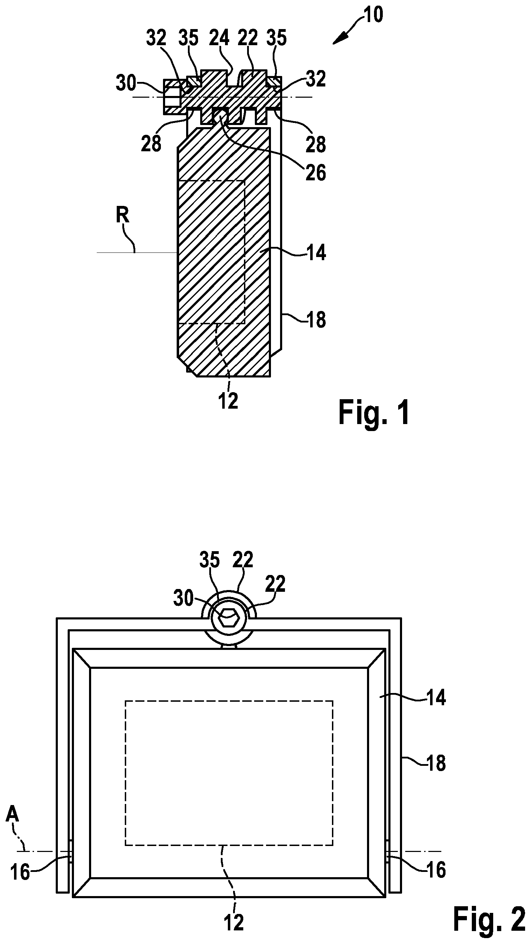

Fig. 1 bis Fig. 3 zeigen eine Sensoreinheit mit einer Sensorhalterung 10 und einem Radarsensor 12, der eine Montageeinheit 14 in Form eines Gehäuses aufweist. Bei dem Radarsensor 12 handelt es sich um einen Radarsensor für ein Fahrerassistenzsystem eines Kraftfahrzeuge, insbesondere für eine Fahrgeschwindigkeitsregler.

Die Montageeinheit 14 ist mittels angeformter, zylindrischer Zapfen 16 schwenkbar an einem Halterahmen 18 der Sensorhalterung gelagert. Der Halterahmen 18 weist wenigstens zwei seitliche Schenkel und eine diese verbindende Basis auf, die U-förmig um die Montageeinheit 14 herum verlaufen. Die Zapfen 16 greifen in hohlzylindrische Ausnehmungen 20 an den seitlichen Schenkeln des Halterahmens 18 ein. In der Schnittdarstellung in Fig. 1 verläuft die Hauptstrahlungsrichtung R des Radarsensors 12 nach links in der Zeichenebene. Die Montageeinheit 14 ist mittels der Zapfen 16 um eine querverlaufende, horizontale Achse A schwenkbar. Am Einbauort in einem Kraftfahrzeug wird die Sensorhalterung 10 an dem Kraftfahrzeug montiert, indem der Halterahmen 18 am Kraftfahrzeug befestigt wird.

Bei einem Verschwenken des an der Montageeinheit 14 angeordneten Radarsensors 12 um die Schwenkachse A ändert sich der Neigungswinkel der Hauptstrahlungsrichtung R des Radarsensors 12 bezüglich der Horizontalen. Zur Justierung dieser Winkelausrichtung ist beabstandet von der Schwenkachse A an dem Halterahmen 18 eine Justierwelle 22 gelagert.

Die Justierwelle weist an einem mittleren, zylindrischen Abschnitt eine schraubenartig um die Justierwelle verlaufende Führungskontur 24 in Form einer schraubenförmigen Umfangsnut auf. In dieser Führungskontur 24 ist ein Führungselement 26 in Form eines Kugelzapfens angeordnet, der beabstandet von der Schwenkachse A an der Montageeinheit 14 angeordnet ist. Die Breite der Nut ist an die Breite des Kugelzapfens, d.h. dessen Durchmesser, angepasst, so dass der Kugelzapfen in axialer Richtung der Justierwelle 22 spielfrei in der Führungskontur positioniert ist. Die Tiefe der Nut der Führungskontur 24 entspricht beispielsweise wenigstens dem Durchmesser des Kugelzapfens. Dadurch kann eine sichere Führung ermöglicht werden.

Die Zapfen 16 und das Führungselement 26 sind beispielsweise in Form von Kunststoffformteilen an der Montageeinheit 14 angeformt.

Im gezeigten Beispiel sind die Justierwelle 22 und das Führungselement 26 im Bereich eines mittleren Abschnitts der Basis des Halterahmens 18 angeordnet. Sie können aber alternativ beispielsweise auch beabstandet von der Schwenkachse A im Bereich eines seitlichen Schenkels des Halterahmens 18 angeordnet sein.

Die Justierwelle 22 weist zwei Lagerabschnitte 28 auf, zwischen denen der erwähnte mittlere Abschnitt angeordnet ist. Zumindest an einem Ende weist die Justierwelle 22 außerdem eine Eingriffskontur 30 zur Drehmomentübertragung auf die Justierwelle auf. Die Eingriffskontur 30 kann beispielsweise in Form einer Innensechskant-Aufnahme für einen Steckschlüssel ausgebildet sein.

Die Justierwelle 22 ist beispielsweise als einstückiges Kunststoffformteil hergestellt.

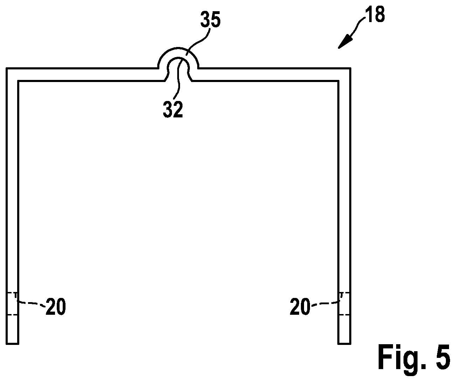

Der Halterahmen 18 ist beispielsweise einstückig aus Kunststoff hergestellt und bildet an seiner Basis zwei koaxial angeordnete, als Drehlager ausgebildete Rastaufnahmen 32, die im Querschnitt in Fig. 5 zu sehen sind. Die Rastaufnahmen 32 sind jeweils auf einem Umfangsabschnitt offen, und zwar auf einer der Montageeinheit 14 zugewandten Seite. Die Rastaufnahmen 32 haben eine hohlzylindrische Form, die durch den offenen Umfangsabschnitt unterbrochen wird. Sie umgreifen jeweils die Lagerabschnitte 28 der Justierwelle 22 auf einem Umfangswinkelbereich von mehr als 180°, so dass die an den Innendurchmesser der Rastaufnahme 32 angepassten Lagerabschnitte 28 in den Rastaufnahmen 32 verrastet gehalten sind. Die Justierwelle 22 ist dadurch drehbar in den Rastaufnahmen 32 gelagert.

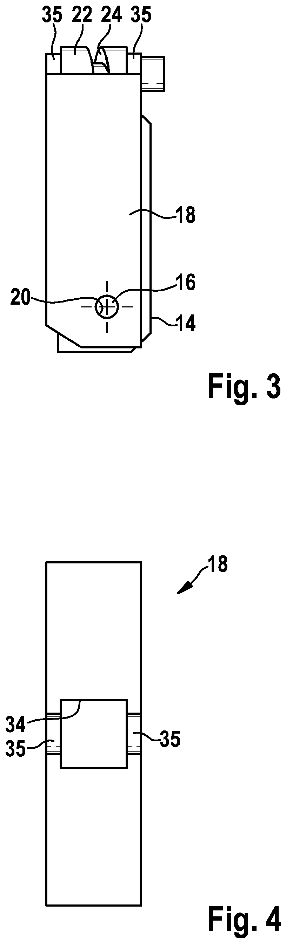

Im gezeigten Beispiel hat der mittlerer Abschnitt der Justierwelle 22, auf dem die Führungskontur 24 ausgebildet ist, einen größeren Außendurchmesser als die Lagerabschnitte 28. Der Verstellweg für die Justierung ist dadurch vergrößert. In dem Bereich zwischen den Rastaufnahmen 32 ist im Halterahmen 18 daher eine Aussparung 34 für den mittleren Abschnitt der Justierwelle 22 gebildet. Fig. 4 zeigt die Aussparung 34 in einer Draufsicht auf den Halterahmen 18. Die Rastaufnahmen 32 sind beispielsweise an Stegen 35 der Basis des Halterahmens 18 ausgebildet, welche Stege 35 die Aussparung 34 an entgegengesetzen Seiten begrenzen. Beispielsweise verbinden die Stege 35 zwei Teilabschnitte des Halterahmens 18.

Die axiale Position der Justierwelle 22 ist durch wenigstens einen Umgangsvorsprung der Justierwelle 22 gegenüber dem Halterahmen 18 festgelegt. Im gezeigten Beispiel werden an den Übergängen von den Lagerabschnitten 28 zum mittleren Abschnitt der Justierwelle 22, der einen größeren Außendurchmesser hat als die Lagerabschnitte 28, zwei Umfangsvorsprünge gebildet, mit denen die axiale Position der Justierwelle 22 zwischen den Rastaufnahmen 32 festgelegt ist. Dies ist in Fig. 1 und Fig. 3 erkennbar.

Zum Zusammenbau der Sensorhalterung kann die Justierwelle 22 einfach von der freien Seite der Rastaufnahmen 32 her in diese eingerastet werden. Anschließend kann das Führungselement 26 in die Führungskontur 24 eingeführt werden und die Montageeinheit 14 mit dem Radarsensor 12 durch Einführen der Zapfen 16 in die Ausnehmungen 20 am Halterrahmen 18 montiert werden.

Fig. 3 zeigt die zusammengesetzte Sensorhalterung in einer Ansicht von der Seite.

Die Justierwelle 22 ist drehbar an dem Halterahmen 18 gelagert und in axialer Richtung festgelegt. Durch Drehen der Justierwelle 22 beispielsweise mittels eines Steckschlüssels ist die axiale Position des Justierelements 26 in Bezug auf die Justierwelle 22 einstellbar. Durch eine Drehung der Justierwelle 22 ist somit die Montageeinheit 14, und damit der Radarsensor 12, um die durch die seitlichen Lagerstellen der Zapfen 16 gehende Schwenkachse A schwenkbar. Da die Führungskontur 24 entlang einer Schraubenlinie um den Umfang der Justierwelle 22 verläuft, deren Steigungswinkel vorzugsweise kleiner als 45° ist, wird auf einfache Weise eine Selbsthemmung der Führung ermöglicht.

Durch den beschriebenen Aufbau kann die Anzahl der notwendigen Bauteile auf ein Minimum reduziert werden. Die Ausrichtung der Justierwelle quer zur Schwenkachse A und annähernd parallel zur Hauptabstrahlrichtung R erlaubt eine nachträgliche Justierung des Neigungswinkels des Radarsensors 12, d.h. nach der Montage des Radarsensors 12 am Kraftfahrzeug. Insbesondere kann bei einer nach vorne gerichteten Hauptabstrahlrichtung R auch die Eingriffskontur 30 zur Drehmomentübertragung nach vorne gerichtet sein, so dass sie leicht zugänglich ist. Ein weiterer Vorteil ist, dass die von der Justierwelle 22 und dem Führungselement 26 gebildete Justiereinrichtung nur einen geringen Bauraum beansprucht. Außerdem ist die Justierwelle 22 zwischen den Rastaufnahmen 32 und der Montageeinheit 14 angeordnet, so dass sie auch im Falle eines Lösens aus einer Rastaufnahme 32 noch die Funktion übernehmen kann, den Radarsensor 12 sicher zu halten. Da beim Eingriff des Führungselements 26 in die Führungskontur 24 lediglich eine Raumkoordinate der Position des Führungselements 26 festgelegt wird, nämlich die Position in axialer Richtung der Justierwelle 22, wird ein besonders einfacher Aufbau der Schwenkhalterung der Montageeinheit 14 am Halterahmen 18 durch die Zapfen 16 ermöglicht.

Der die Führungskontur aufweisende Abschnitt der Justierwelle ist vorzugsweise rund und kann zylindrisch sein oder kann, abweichend vom beschriebenen Beispiel, einen variierenden Außenradius aufweisen, beispielsweise kegelstumpfförmig sein.

## Patentansprüche

1. Sensorhalterung für einen Sensor (12) zur Objektdetektion, mit einer Montageeinheit (14) für den Sensor (12) und mit einem Halterahmen (18), an dem die Montageeinheit (14) schwenkbar gehalten ist, und mit einer an dem Halterahmen (18) gelagerten Justierwelle (22), die eine schraubenartig um die Justierwelle (22) verlaufende Führungskontur (24) aufweist, die in Eingriff mit einem Führungselement (26) der Montageeinheit (14) steht, wobei der Halterahmen (18) wenigstens eine als Drehlager ausgebildete Rastaufnahme (32) für wenigstens einen Abschnitt (28) der Justierwelle (22) aufweist, und wobei die Rastaufnahme (32) auf einem Umfangsabschnitt offen ist.

2. Sensorhalterung nach Anspruch 1, bei der die Montageeinheit (14) über Zapfen (16), die auf einer Schwenkachse (A) der Montageeinheit (14) angeordnet sind, am Halterahmen (18) gehalten ist.

3. Sensorhalterung nach Anspruch 1 oder 2, bei der die wenigstens eine Rastaufnahme (32) auf einem der Montageeinheit (14) zugewandten Umfangsabschnitt offen ist.

4. Sensorhalterung nach einem der vorstehenden Ansprüche, bei der ein mittlerer Abschnitt der Justierwelle (22) die Führungskontur (24) aufweist und dieser mittlere Abschnitt zwischen zwei Abschnitten (28) angeordnet ist, die jeweils in einer als Drehlager ausgebildeten Rastaufnahme (32) des Halterahmens (18) eingesetzt sind.

5. Sensorhalterung nach einem der vorstehenden Ansprüche, bei der die Justierwelle (22) in der wenigstens einen Rastaufnahme (32) verrastet und drehbar gelagert ist.

6. Sensorhalterung nach einem der vorstehenden Ansprüche, bei der eine axiale Position der Justierwelle (22) durch wenigstens einen Umfangsvorsprung der Justierwelle (22) gegenüber dem Halterahmen (18) festgelegt ist.

7. Sensorhalterung nach einem der vorstehenden Ansprüche, bei der die Justierwelle (22) als einstückiges Kunststoffteil ausgebildet ist.

8. Sensoreinheit mit einer Sensorhalterung nach einem der Ansprüche 1 bis 7 und mit einem an der Montageeinheit (14) angeordneten Sensor (12) zur Objektdetektion, insbesondere einem Radarsensor.

## Claims

1. Sensor holder for an object-detection sensor (12), having an installation unit (14) for the sensor (12), having a retaining frame (18), on which the installation unit (14) is retained in a pivotable manner, and having an adjustment shaft (22), which is mounted on the retaining frame (18) and has a guidance contour (24) which runs helically around the adjustment shaft (22) and is in engagement with the guidance element (26) of the installation unit (14), wherein the retaining frame (18) has at least one latching mount (32), which is designed in the form of a rotary bearing and is intended for at least one portion (28) of the adjustment shaft (22), and wherein the latching mount (32) is open over a circumferential portion.

2. Sensor holder according to Claim 1, in the case of which the installation unit (14) is retained on the retaining frame (18) via pins (16) which are arranged along a pivot axis (A) of the installation unit (14).

3. Sensor holder according to Claim 1 or 2, in the case of which the at least one latching mount (32) is open over a circumferential portion which is directed towards the installation unit (14).

4. Sensor holder according to one of the preceding claims, in the case of which a central portion of the adjustment shaft (22) has a guidance contour (24) when said central portion is arranged between two portions (28) which are each inserted in a latching mount (32) of the retaining frame (18), said latching mount being designed in the form of a rotary bearing.

5. Sensor holder according to one of the preceding claims, in the case of which the adjustment shaft (22) is latched, and mounted in a rotatable manner, in the at least one latching mount (32).

6. Sensor holder according to one of the preceding claims, in the case of which an axial positon of the adjusting shaft (22) is defined in relation to the retaining frame (18) by at least one circumferential protrusion of the adjustment shaft (22).

7. Sensor holder according to one of the preceding claims, in the case of which the adjustment shaft (22) is designed in the form of a single-piece plastics-material component.

8. Sensor unit having a sensor holder according to one of Claims 1 to 7, and having an object-detection sensor (12), in particular a radar sensor, arranged on the installation unit (14).

## Revendications

1. Support de capteur pour un capteur (12) destiné à la détection d'objets, avec une unité de montage (14) pour le capteur (12) et avec un châssis de support (18), au niveau duquel l'unité de montage (14) est maintenue de manière pivotante, et avec un arbre d'ajustement (22) qui est positionné au niveau du châssis de support (18) et qui présente un contour de guidage (24) évoluant de manière hélicoïdale autour de l'arbre d'ajustement (22), lequel contour de guidage est en prise avec un élément de guidage (26) de l'unité de montage (14), selon lequel le châssis de support (18) présente tout au moins un logement par encliquetage (32), lequel est conçu sous la forme d'un palier rotatif pour tout au moins une section (28) de l'arbre d'ajustement (22), et selon lequel le logement par encliquetage (32) est ouvert sur une section périphérique.

2. Support de capteur selon la revendication 1, dans lequel l'unité de montage (14) est maintenue au niveau du châssis de support (18) par l'intermédiaire de tenons (16) qui sont disposés sur un axe de pivotement (A) de l'unité de montage (14).

3. Support de capteur selon la revendication 1 ou 2, dans lequel le tout au moins un logement par encliquetage (32) est ouvert sur une section périphérique tournée vers l'unité de montage (14).

4. Support de capteur selon l'une des revendications précédentes, dans lequel une section centrale de l'arbre d'ajustement (22) présente le contour de guidage (24) et où cette section centrale est disposée entre deux sections (28) qui sont insérées respectivement dans un logement par encliquetage (32) du châssis de support (18), lequel logement par encliquetage est conçu sous la forme d'un palier rotatif.

5. Support de capteur selon l'une des revendications précédentes, dans lequel l'arbre d'ajustement (22) est fixé par encliquetage et positionné de manière rotative dans le tout au moins un logement par encliquetage (32).

6. Support de capteur selon l'une des revendications précédentes, dans lequel une position axiale de l'arbre d'ajustement (22) est déterminée par tout au moins une saillie périphérique de l'arbre d'ajustement (22) par rapport au châssis de support (18).

7. Support de capteur selon l'une des revendications précédentes, dans lequel l'arbre d'ajustement (22) est conçu sous la forme d'une pièce en plastique fabriquée en une seule pièce.

8. Unité de capteur avec un support de capteur selon l'une des revendications 1 à 7 et avec un capteur (12) disposé au niveau de l'unité de montage (14), en particulier un capteur radar, en vue de la détection d'objets.
